# EUROPÄISCHE PATENTANMELDUNG

(11) **EP 1 441 468 A1**
(43) Veröffentlichungstag der Anmeldung: **28.07.2004**
(21) Anmeldenummer: 03001174.6
(22) Anmeldetag: 21.01.2003
(51) Int. Cl.: H04L 12/28, H04Q 7/38

(54) **Verfahren zur Übertragung von Daten in einem lokalen und einem supralokalen Funkkommunikationssystem und zugehöriges Netzwerk**

(71) Anmelder: SIEMENS AKTIENGESELLSCHAFT, 80333 München (DE)
(72) Erfinder: Beckmann, Mark, 38102 Braunschweig (DE); Choi, Hyung-Nam, 22117 Hamburg (DE); Eckert, Michael, 38122 Braunschweig (DE)

(57) **Zusammenfassung**

Die Erfindung betrifft ein Verfahren und ein Netzwerk zur Übertragung von Daten in mindestens zwei Funkkommunikationssystemen (UMTS, WLAN), wobei mindestens ein lokales Funkkommunikationssystem (WLAN) an mindestens ein zellulares, supralokales Funkkommunikationssystem (UMTS) insbesondere über eine Netzanbindungs-Einheit (IWU) angebunden ist und wobei eine Teilnehmerstation (MT) mit den mindestens zwei Funkkommunikationssystemen (UMTS, WLAN) über jeweils mindestens eine Funkzugangseinrichtung (NodeB, AP) kommunizieren kann. Erfindungsgemäß überträgt die Funkzugangseinrichtung (NodeB) des mindestens einen zellularen, supralokalen Funkkommunikationssystems (UMTS) an die Teilnehmerstation (MT) Informationen bezüglich des mindestens einen lokalen Funkkommunikationssystem (WLAN) als Broadcast. Diese Informationen werden bevorzugt in Form von Systeminformationsblöcken übertragen.

## Beschreibung

Die Erfindung betrifft ein Verfahren zur Übertragung von Daten in mindestens zwei Funkkommunikationssystemen nach dem Oberbegriff des Anspruchs 1.

Die Erfindung betrifft ferner ein Netzwerk zur Übertragung von Daten mit mindestens zwei Funkkommunikationssystemen nach dem Oberbegriff des Anspruchs 8.

Kommunikationssysteme und insbesondere solche mit einer Übertragung über Funk haben eine große Bedeutung im wirtschaftlichen, aber auch im privaten Bereich bekommen. In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) und auch digitale Daten.

Für der zweiten Mobilfunkgeneration (2G) nachfolgende Mobilfunkkommunikationssysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen eines großen Angebots an Diensten zur Datenübertragung und vor allem einer flexiblen Verwaltung der Kapazität der Funkschnittstelle, die bei Funkkommunikationssystemen die Schnittstelle mit den geringsten Ressourcen ist. Bei diesen Funkkommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzten Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen beispielsweise der zweiten und/oder dritten Generation können Informationen kanalvermittelt (CS Circuit Switched) oder paketvermittelt (PS Packet Switched) übertragen werden.

Die Verbindung zwischen den einzelnen Stationen erfolgt über eine Funkkommunikations-Schnittstelle (Luftschnittstelle). Basisstation und Funknetzwerkkontrolleinrichtung sind üblicherweise Bestandteile eines Basisstationssubsystems (RNS Radio Network Subsystem). Ein zellulares Funkkommunikationssystem umfasst in der Regel mehrere Basisstationssubsysteme, die an ein Kernnetz (CN Core Network) angeschlossen sind. Dabei ist die Funknetzwerkkontrolleinrichtung (RNC Radio Network Controller) des Basisstationssubsystems in der Regel bei paketvermittelten Datenübertragungen mit einer Zugangseinrichtung (SGSN Serving GPRS Support Node, mit GPRS General Packet Radio Service) des Kernnetzes verbunden. Diese Zugangseinrichtung des Kernnetzes erfüllt eine ähnliche Aufgabe wie die Knoten MSC (Mobile-services Switching Centre) und VLR (Visitor Location Register) für den kanalvermittelnden Teil des Kernnetzes. An die Zugangseinrichtung des Kernnetzes ist üblicherweise eine Übergangseinrichtung (GGSN Gateway GPRS Support Node) in andere Paketdatennetze wie beispielsweise das Internet angeschlossen.

Außer den beschriebenen gewöhnlich weiträumig organisierten (supralokalen) Funknetzen gibt es auch drahtlose lokale Netze (WLANs Wireless Local Area Networks) mit einem in der Regel räumlich begrenzten Funkabdeckungsbereich. Diese eignen sich beispielsweise hervorragend für einen hochbitratigen Internetzugang. WLANs übertragen Daten in einer ersten Version bei einer Frequenz um 2,4 GHz, in einer weiteren Version in einem Frequenzbereich bei etwa 5-6 GHz, wo quasi optische Ausbreitungsmerkmale herrschen.

Mit WLAN kann ein drahtloses lokales Kommunikationsnetz aufgebaut werden, wobei die Teilnehmerstationen (MTs Mobile Terminals) per Funk über WLAN-Basisstationen (APs Access Points) an Breitband-Datennetze (BDN Broadband Data Networks) verbunden sind. Jede Basisstation versorgt alle in einer Zelle befindlichen Teilnehmerstationen. Dabei ist die Zellengröße in der Regel auf bis zu einigen hundert Metern begrenzt. Prinzipiell kann mit WLAN ein zellulares Funknetz erstellt werden, in dem bei einer entsprechenden Bewegung der Teilnehmerstation eine bestehende Datenverbindung von Basisstation zu Basisstation übergeben werden kann (Roaming). Die maximalen Datenraten sind abhängig von der jeweiligen WLAN-Technologie und können bis zu 54 Mbit/s betragen.

Derzeit wird die Anbindung von WLANs an die räumlich in der Regel weit reichende, zellularen Funkkommunikationssysteme beispielsweise der zweiten und/oder dritten Generation diskutiert, beispielsweise in 3GPP-Standardisierungsgremien (3GPP Third Generation Partnership Project). Aufgrund der technischen Möglichkeiten von WLANs wie insbesondere die hohen Datenraten besteht ein großes Interesse, diese Technologie als Ergänzung zu supralokalen Funkkommunikationssystemen - beispielsweise als Ergänzung zu UMTS - in den sog. "Hot-Spots" zu nutzen, d.h. in lokal begrenzten Bereichen insbesondere mit großer Teilnehmerdichte wie z.B. Flughäfen, Hotels oder dergleichen. Hierbei können verschiedene WLAN-Technologien Verwendung finden, die einen breitbandigen Funkzugang zu den Breitband-Datennetzen ermöglichen und die beispielsweise auf TCP/IP (TCP Transmission Control Protocol / IP Internet Protocol), ATM (Asynchronous Transfer Mode) oder B-ISDN (Broadband Integrated Services Digital Network) basieren können. Beispiele für Breitband-WLAN-Technologien sind IEEE 802.11-Technologien (IEEE Institute of Electrical and Electronics Engineers) wie z.B. IEEE 802.11a, IEEE 802.11b oder Hiperlan/2 (High Performance Local Area Network Type 2), OpenAir oder SWAP (Shared Wireless Access Protocol). Im Rahmen der vorliegenden Erfindung wird die Bezeichnung "WLAN" stellvertretend für die einzelnen verschiedenen Breitband-WLAN-Technologien verwendet.

Für die Anbindung von WLANs an ein überörtliches bzw. überregionales Funknetz wie das UMTS besteht eine sehr attraktive Möglichkeit in einer eher "lockeren" Anbindung von WLAN und UMTS, bei der WLAN und UMTS eigenständige Systeme darstellen, welche über eine Netzanbindungs-Einheit (IWU Interworking Unit) miteinander verbunden sind.

Die Aufgabe der Systemanbindungs-Einheit ist die Umsetzung von Signalisierungs- und Nutzerdaten von WLAN zu UMTS und umgekehrt. Diese Anbindung auf Basis einer Netzanbindungs-Einheit (IWU Interworking Unit) ist sehr vorteilhaft, weil hierdurch verhältnismäßig geringe Änderungen in der Netzwerkund Protokoll-Architektur von WLAN und insbesondere von UMTS durchzuführen sind. In einer UMTS-Teilnehmerstation kann beispielsweise die hardware-mäßige WLAN-Anbindung durch ein entsprechendes Modul in der Form bewerkstelligt werden, dass das Modul z.B. entweder als WLAN-Funkteil bereits mitintegriert ist oder als WLAN-PC-Karte in die Anschlüsse einer entsprechenden Schnittstelle der Teilnehmerstation bzw. des Terminals, beispielsweise einer PCMCIA-Schnittstelle, eingeschoben wird.

Damit steht ein Verfahren und ein zugehöriges Netzwerk zur Übertragung von Daten in mindestens zwei Funkkommunikationssystemen umfassend mindestens ein lokales Funkkommunikationssystem und mindestens ein zellulares, supralokales (d.h. regional oder überregional aufgespanntes bzw. flächendeckendes) Funkkommunikationssystem zur Verfügung, wobei eine Teilnehmerstation mit den mindestens zwei Funkkommunikationssystemen über jeweils mindestens eine Funkzugangseinrichtung der mindestens zwei Funkkommunikationssysteme kommunizieren kann.

Aufgrund des bevorzugten Anwendungsszenarios von WLAN in den Hot-Spots wird angenommen, dass es zukünftig weltweit eine Vielzahl von öffentlichen wie auch von privaten WLAN-Providern geben wird, die ihre Netze mit gleichen oder aber auch mit jeweils verschiedenen WLAN-Technologien betreiben können.

Damit eine dafür geeignete Teilnehmerstation, welche grundsätzlich in der Lage ist, sowohl mit einem lokalen zellularen, supralokalen Funkkommunikationssystem als auch mit einem lokalen Funkkommunikationssystem zu kommunizieren und welche sich aktuell in einer Funkzelle des zellularen, supralokalen Funkkommunikationssystems befindet, auch auf eine Datenübertragung unter Nutzung mindestens eines lokalen Funkkommunikationssystems zurückgreifen kann, sind geeignete Maßnahmen zu ergreifen, die dies ermöglichen bzw. erleichtern sollen.

Der Erfindung liegt daher die Aufgabe zugrunde, ein Verfahren und ein Netzwerk der eingangs genannten Art aufzuzeigen, welche derartige Maßnahmen ermöglichen bzw. bereitstellen, ohne dass eine starke Anbindung oder Kopplung zwischen dem bzw. den lokalen Funkkommunikationssystem(en) und dem zellularen, supralokalen Funkkommunikationssystem erforderlich sein muss. Die vorhandene Infrastruktur sollte dabei gegebenenfalls - soweit dies möglich und/oder sinnvoll ist - ausgenutzt werden.

Die Aufgabe wird für das Verfahren mit den Merkmalen des Anspruchs 1, für das Netzwerk mit den Merkmalen des Anspruchs 8 gelöst.

Vorteilhafte Ausgestaltung und Weiterbildungen sind Gegenstand der abhängigen Ansprüche.

Erfindungsgemäß überträgt die Funkzugangseinrichtung des mindestens einen zellularen, supralokalen Funkkommunikationssystems an die Teilnehmerstation Informationen bezüglich des mindestens einen lokalen Funkkommunikationssystem als Broadcast (Rundsenderuf).

Im Hinblick auf das schnelle Auffinden von einem oder mehreren lokalen Funkkommunikationssystemen (d.h. WLAN-Zellen) sowie weiterer Informationen zur Nutzung dieser lokalen Funkkommunikationssysteme (z.B. bezüglich der Identität und Zugangsmöglichkeit) ist es für den Nutzer des supralokalen Funkkommunikationssystems (z.B. UMTS-Nutzer) sehr vorteilhaft, dass ihm von der Zelle, in der er sich gerade befindet, in Form von Broadcast-Informationen über verfügbare lokale Funkkommunikationssysteme zur Verfügung gestellt werden, die sich innerhalb der Zelle des supralokalen Funkkommunikationssystems oder benachbart dazu befinden. In der vorliegenden Erfindung werden zumindest von einer Funkzugangseinrichtung (Mobilfunk-Basisstation) des supralokalen Funkkommunikationssystems Informationen über die verfügbaren lokalen Funkkommunikationssysteme (d.h. WLANs bzw. WLAN-Zellen) per Broadcast in die Funkzelle übertragen, so dass alle Mobilfunkteilnehmer, die sich gerade in der Funkzelle des supralokalen Funkkommunikationssystems befinden, diese Informationen empfangen können. Besonderer Maßnahmen bedarf es dabei seitens der Teilnehmerstation nicht, da die Teilnehmerstationen Broadcast-Informationen der Funkzelle des supralokalen Funkkommunikationssystems ohnehin empfangen müssen.

Denn in derzeitigen Mobilfunksystemen der zweiten Generation, wie dem GSM/GPRS, oder der zukünftigen dritten Generation, wie dem UMTS, werden System- und Zell-relevante Informationen einer Mobilfunkzelle von einer Basisstation über einen Broadcast-Kanal gesendet, so dass alle in der Funkzelle befindlichen Mobilfunkteilnehmer diese wichtige Informationen empfangen können. Diese Informationen umfassen beispielsweise u.a. die PLMN-Identität (PLMN Public Land Mobile Network), die Nachbarzellen, die Konfiguration der gemeinsamen Ressourcen sowie Parameter für Messungen. Dadurch, dass die Erfindung diese bestehenden Einrichtungen des zellularen, supralokalen Funkkommunikationssystems ausnutzt, kann auf einfache Art und Weise Informationen über verfügbare WLAN-Zellen per Broadcast an alle Mobilfunkteilnehmer mindestens in einer Funkzelle des supralokalen Funkkommunikationssystems übertragen werden.

Die Teilnehmerstationen können dabei - müssen aber nicht - mobil sein.

In Weiterbildung der Erfindung können Informationen bezüglich des mindestens einen lokalen Funkkommunikationssystem (WLAN) in Form von Systeminformationsblöcken (SIB System Information Block) übertragen werden. Damit ist es möglich, die Broadcast-Informationen zu verfügbaren lokalen Funkkommunikationssystemen ohne größere Systemänderungen zu übertragen, da beispielsweise im UMTS eine Broadcast-Übertragung mittels Systeminformationsblöcken vorgesehen ist.

Grundsätzlich besteht die Möglichkeit, dass die Informationen bezüglich des mindestens einen lokalen Funkkommunikationssystems in mindestens einem spezifischen Systeminformationsblock separat von anderen Systeminformationen übertragen werden. In diesem Fall sind folglich keine anderen Informationen in den Systeminformationsblöcken bezüglich des WLAN bzw. der WLANs enthalten.

Es ist alternativ aber auch möglich, dass die Informationen bezüglich des mindestens einen lokalen Funkkommunikationssystem in Systeminformationsblöcken zusammen mit andersartigen Systeminformationen übertragen werden. In einem solchen Systeminformationsblock sind beispielsweise Broadcast-Informationen zum supralokalen UMTS und zu einem WLAN enthalten.

Diese erwähnten Varianten können auch gemeinsam genutzt werden, so dass sowohl spezifische Systeminformationsblöcke zu den lokalen Funkkommunikationssystemen als auch gemischte Systeminformationsblöcke mit Informationen einerseits zu mindestens einem lokalen Funkkommunikationssystem und andererseits zu beispielsweise mindestens einem supralokalen Funkkommunikationssystem vorkommen.

In Ausgestaltung der Erfindung können die Informationen bezüglich des mindestens einen lokalen Funkkommunikationssystems als einzelne Informationselemente übertragen werden. Dabei werden die einzelnen Informationselemente vorzugsweise in Systeminformationsblöcken übertragen.

Die Informationselemente können insbesondere mit Vorteil Angaben zur Identität, zur Position des mindestens einen lokalen Funkkommunikationssystems und/oder zur Zugangsinformation zu dem mindestens einen lokalen Funkkommunikationssystem umfassen.

Nach einer Ausgestaltung der Erfindung können die Informationen bezüglich des mindestens einen lokalen Funkkommunikationssystem zyklisch übertragen werden. Dies bietet organisatorische Vorteile.

Das erfindungsgemäße Netzwerk zur Übertragung von Daten mit mindestens zwei Funkkommunikationssystemen zeichnet sich dadurch aus, dass eine Funkzugangseinrichtung des mindestens einen zellularen, supralokalen Funkkommunikationssystems Mittel zum Übertragen von Informationen bezüglich des mindestens einen lokalen Funkkommunikationssystem an die Teilnehmerstation als Broadcast aufweist.

Die Mittel zum Übertragen von Informationen bezüglich des mindestens einen lokalen Funkkommunikationssystem können zum Übertragen in Form von Systeminformationsblöcken ausgebildet sein.

Nach einer Ausgestaltung des erfindungsgemäßen Netzwerks können die Mittel zum Übertragen von Informationen bezüglich des mindestens einen lokalen Funkkommunikationssystem so ausgebildet sein, dass die Informationen bezüglich des mindestens einen lokalen Funkkommunikationssystems in mindestens einem spezifischen Systeminformationsblock separat von anderen Systeminformationen und/oder in Systeminformationsblöcken zusammen mit andersartigen Systeminformationen übertragen werden.

Bevorzugt kann das mindestens eine lokale Funkkommunikationssystem an das mindestens eine zellulare, supralokale Funkkommunikationssystem über eine Netzanbindungs-Einheit angebunden sein. Dies ermöglicht eine schwache Anbindung oder Kopplung zwischen lokalem Funkkommunikationssystem und zellularem, supralokalem Funkkommunikationssystem.

Das erfindungsgemäße Netzwerk eignet sich insbesondere zur Durchführung des erfindungsgemäßen Verfahrens. Im übrigen können im erfindungsgemäßen Netzwerk entsprechende Mittel vorgesehen sein, um die Verfahrensschritte ausführen zu können.

Nachfolgend soll die Erfindung bzw. Einzelheiten und Details der Erfindung anhand von in Figuren dargestellten Ausführungsbeispielen näher erläutert werden.

Hierbei zeigen:
- Fig. 1:: ein vereinfachtes Schema für eine Netzarchitektur einer Anbindung eines lokales Funkkommunikations-system an ein zellulares, supralokales Funkkommunikationssystem über eine Netzanbindungs-Einheit,
- Fig. 2:: ein Beispiel-Szenario für eine hierarchische Mobilfunk-Zellstruktur,
- Fig. 3:: ein Beispiel zur Übertragung von Systeminformationen als Broadcast in einem UMTS-Netz.

Ohne Einschränkung der Erfindung wird im folgenden die erfindungsgemäße Broadcast-Übertragung von Systeminformationen anhand eines Beispiels mit einem UMTS-System als zellularem, supralokalem Funkkommunikationssystem erläutert.

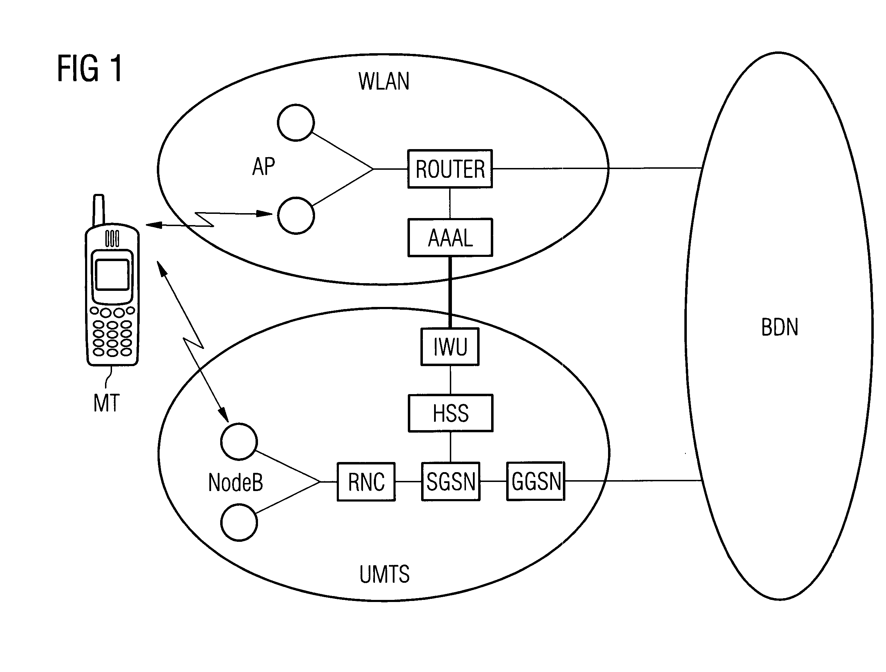

In Figur 1 ist ein vereinfachtes Schema für eine mögliche Netzarchitektur als Beispiel illustriert.

Hierbei ist die Netzarchitektur des lokalen Funkkommunikationssystems WLAN mit den Elementen mindestens einer Funkzugangseinrichtung AP (zwei Funkzugangseinrichtungen AP sind stellvertretend für eine mögliche Vielzahl gezeigt), eines Vermittlungsknotens ROUTER und einer Authentisierungseinheit AAAL (Authentication Authorization Accounting Local) dargestellt. Das lokale Funkkommunikationssystem WLAN weist über den Vermittlungsknoten ROUTER eine Verbindung zu einem Breitband-Datennetz BDN auf.

Die vereinfacht dargestellte Netzarchitektur des zellularen, supralokalen Funkkommunikationssystem UMTS umfasst die Elemente mindestens einer Funkzugangseinrichtung oder Basisstation NodeB (zwei Funkzugangseinrichtungen NodeB sind stellvertretend für eine mögliche Vielzahl gezeigt), einer Funknetzwerkkontrolleinrichtung RNC, einer Zugangseinrichtung SGSN des Kernnetzes, einer Übergangseinrichtung GGSN in andere Paketdatennetze und eines Heimnutzerservers HSS (Home Subscriber Server). Das zellulare, supralokale Funkkommunikationssystem UMTS ist mittels der Übergangseinrichtung GGSN mit dem Breitband-Datennetz BDN verbunden.

Das lokale Funkkommunikationssystem WLAN ist an das supralokale Funkkommunikationssystem UMTS über eine Netzanbindungs-Einheit IWU des Funkkommunikationssystems UMTS angebunden.

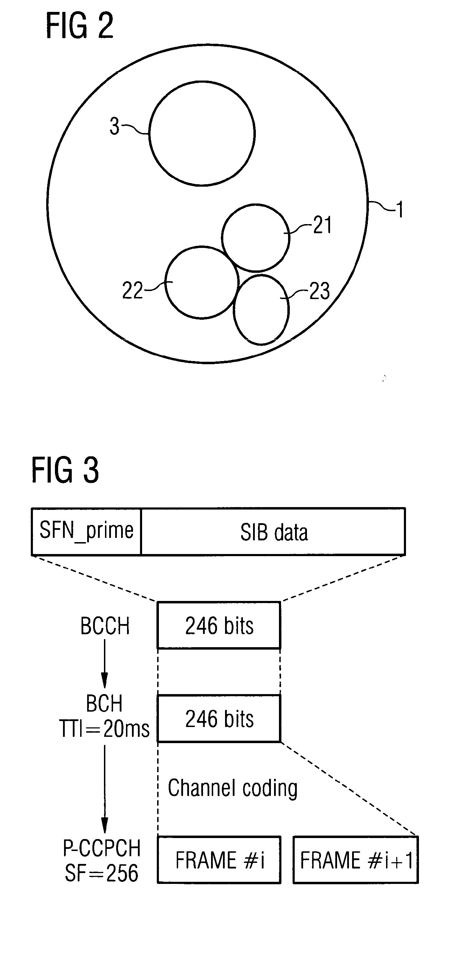

In Figur 2 ist als Beispiel eine mögliche hierarchische Mobilfunk-Zellstruktur illustriert. Es sind jeweils Funkabdeckungsbereiche von Funkzellen dargestellt. Die Funkzelle 1 ist dabei als UMTS-Zelle angenommen, in der sich z.B. zur Versorgung von Hot-Spots weitere Zellen befinden. Die drei Funkzellen 21, 22 und 23 stellen WLAN-Zellen dar, während die Funkzelle 3 wiederum beispielsweise eine Zelle nach dem UMTS-Standard ist. In dem gezeigten Szenario nach Figur 2 kann also der UMTS-Nutzer neben dem UMTS-Netz in den WLAN-Zellen 21, 22 und 23 auch WLAN nutzen, vorausgesetzt, er verfügt für den WLAN-Zugang über mindestens ein WLAN-Modul mit der entsprechenden Technologie und hat sich beim jeweiligen Netzprovider als Kunde eingeschrieben bzw. ist in irgendeiner Weise als Teilnehmer zur Nutzung einer oder mehrerer der WLAN-Zellen 21, 22 und 23 berechtigt.

Figur 3 verdeutlicht ein Beispiel zur Übertragung von Systeminformationen als Broadcast in einem UMTS-Netz. Hierbei wird als Beispiel ein UMTS FDD-System näher betrachtet. Selbstverständlich kann die Erfindung auch für andere Systeme Anwendung finden.

Die Broadcast-Übertragung von Systeminformationen im UMTS FDD-System ist detailliert in
- 3GPP TS 25.331: RRC Protocol Specification
beschrieben.

Figur 3 zeigt die protokollmäßige Übertragung der Systeminformationen auf der Netzwerkseite. Systeminformationen werden immer in Form einer Nachricht der Länge 246 bits übertragen. Die Nachricht besteht aus der Systemrahmennummer "SFN_prime" der Länge 12 bits und der eigentlichen Informationen "SIB data" der Länge 234 bits. Die Nachricht wird transparent über den logischen Broadcast Control Channel (BCCH) und den Transportkanal BCH (Broadcast Channel) zur physikalischen Schicht übertragen. In der physikalischen Schicht wird die Nachricht dann zum Schutz vor Kanalübertragungsfehlern kodiert (Channel coding) und anschließend von einer Basisstation (NodeB) über den physikalischen Kanal P-CCPCH (Primary Common Control Physical Channel) per Broadcast an alle Mobilfunkteilnehmer in der Zelle übertragen. Dabei werden die Daten auf dem P-CCPCH mit dem Spreizfaktor SF=256 gespreizt und mit der Übertragungszeitlänge TTI=20ms (Transmission Time Interval) über die Luft in die Zelle gesendet, d.h. die Nachricht wird in zwei aufeinanderfolgende FDD-Rahmen der Länge 10ms, nämlich dem Rahmen FRAME #i und dem Rahmen FRAME #i+1 in Figur 3, gesendet.

Insgesamt werden auf diese Weise eine Vielzahl von Systeminformationen in die Mobilfunkzelle übertragen. Nach Art der Informationen sind diese in verschiedenen Blöcken gruppiert, den sogenanten SIBs (System Information Block). In UMTS sind derzeit 18 SIBs definiert. Beispiele sind:
- SIB 1: Enthält die Informationen zum UMTS-Kernnetz sowie die Konfiguration von Systemrelevanten Timern und Konstanten.
- SIB 3: Enthält die Parameter für Zellauswahl und Zellwechsel.
- SIB 5: Enthält die Konfiguration der physikalischen Common Ressourcen im Idle Mode.
- SIB 11: Enthält die Informationen zur Durchführung von Messungen.
- SIB 15: Enthält die Informationen über die verschiedenen Methoden zur Positionsbestimmung.

Die einzelnen SIBs haben unterschiedliche Größen, so dass mit einer Systeminformationsnachricht der Länge 246 bits nicht alle SIBs übertragen werden können. Das bedeutet, dass in Abhängigkeit der jeweiligen Zellkonfiguration die komplette Übertragung aller SIBs bis zu 40.96s dauern kann. Nach einer kompletten Übertragung aller Systemrelevanten Informationen werden diese in der Zelle zyklisch wiederholt übertragen, wobei jeweils die neuesten Informationen in Abhängigkeit von der aktuellen Zellkonfiguration gesendet werden.

Erfindungsgemäss kann ein neuer Systeminformationsblock (z.B. SIB 19) spezifiziert werden, der alle relevanten WLAN-Systeminformationen enthält. Für alle verfügbaren WLAN-Zellen können über das neue WLAN-SIB beispielsweise insbesondere folgende Parameter per Broadcast in die Mobilfunkzelle übertragen werden:
Informationselemente bzgl. WLAN-Identität:
   - PLMN = Identität des WLAN-Providers
   - SSID (Service Set Identity) = Name des WLAN-Netzes
   - IP-Adresse = IP-Adresse der AP (=WLAN-Basisstation)
   - WLAN-Technologie = Technologie der WLAN-Zelle.
Informationselement bzgl. Position:
   - Positionsdaten der WLAN-Zelle in Form (X, Y, R) mit dem horizontalem Wert X und dem vertikalem Wert Y des kartesischen Koordinatensystems sowie dem Zellradius R.
Informationselemente bzgl. Zugangs informationen:
   - Typ = Typ der WLAN-Zelle
   - Kategorie = Kategorie der WLAN-Zelle
   - Zugangsrestriktionen = Einschränkung des WLAN-Zugangs auf Basis der Teilnehmer-Priorität
   - Anzubietende QoS (Quality of Service) = Dienstqualität, die die WLAN-Zelle einem Teilnehmer anbietet
   - Aktuelle Zellauslastung = aktuelle Auslastung der WLAN-Zelle.

Die nachfolgende Tabelle 1 zeigt ein Beipiel für die Struktur eines neuen WLAN-Systeminformationsblocks mit Angabe des möglichen Wertebereichs für die einzelnen Informationselemente. In diesem Beispiel werden die Informationen bezüglich eines oder mehrere lokaler Funkkommunikationssysteme in einem spezifischen Systeminformationsblock separat von anderen Systeminformationen übertragen. Als Alternative könnten die relevanten WLAN-Systeminformationen auch in bereits bestehende Systeminformationsblöcke eingefügt werden.

**Tabelle 1:**

| Struktur eines neuen WLAN-SIBs | |
|---|---|
| **Informationselement** | **Wertebereich** |
| WLAN-SIB | 1 ... MaxAnzahlWLANZellen |
| >WLAN-Identität: | |
| >>PLMN | 6 Ziffern |
| >>SSID | 32 Bytes |
| >>IP-Adresse | 4 Bytes |
| >>WLAN-Technologie | Liste=(Hiperlan/2, IEEE 802.11a, IEEE 802.11b, etc.) |
| >Positionsdaten: | (X, Y, R) mit R in Metern |
| >Zugangsinformationen: | |
| >>Typ | Liste=(Privat, Öffentlich, etc.) |
| >>Kategorie | Liste=(Hotel, Flughafen, Café, etc.) |
| >>Zugangsrestriktionen | Integer=(1 ... N) |
| >>Anzubietende QoS | Liste=(Best Effort, Garantierte Bitrate, Maximale Bitrate, Übertragungsverzögerung, Bitfehlerrate) |
| >>Aktuelle Zellauslastung | Integer=(0 ... 100) in % |

Die Vorteile dieses Beispiels nach der Erfindung sind:
- Es wird einem Mobilfunkteilnehmer das schnelle Auffinden von WLAN-Zellen ermöglicht, die sich innerhalb oder benachbart zu seiner aktuellen Mobilfunkzelle befinden.
- Dem Mobilfunkteilnehmer wird auf effiziente Weise wertvolle Informationen beispielsweise bezüglich der Identität und Zugangsmöglichkeit der verfügbaren WLAN-Zellen mitgeteilt.

Weitere Einzelheiten der Erfindung werden im nachfolgenden Ausführungsbeispiel näher erläutert. Hierzu wird angenommen, dass sich ein Mobilfunkteilnehmer in einer UMTS-Mobilfunkzelle befindet, in der er mit seinem UMTS-Terminal über ein WLAN-Funknetz, beispielsweise basierend auf der IEEE 802.11b-Technologie, eine Internet-Verbindung aufbauen will. Sein Terminal verfügt über ein entsprechendes WLAN-Modul. Beim Vertragsabschluss mit seinem UMTS-Provider T-Mobil wurde ihm zur WLAN-Nutzung die Teilnehmer-Priorität 8 (mittlere Priorität) zugewiesen. Seine aktuelle UMTS-Funkzelle überträgt nun per Broadcast Systeminformationen über alle verfügbaren WLAN-Zellen, die sich innerhalb der UMTS-Funkzelle oder benachbart dazu befinden. Es wird eine Mobilfunk-Zellstruktur nach Figur 2 angenommen, und der Mobilfunkteilnehmer empfängt über den WLAN-SIB folgende Konfigurationen für die drei WLAN-Zellen 21, 22 und 23:
WLAN-Zelle 21:
   - PLMN = 262001 (= T-Mobil)
   - SSID = "WLAN-Zelle der T-Mobil"
   - IP-Adresse = 232.210.120.33
   - WLAN-Technologie = IEEE 802.11b
   - Positionsdaten: (X21, Y21, 50m)
   - Typ = Öffentlich
   - Kategorie = Cafe
   - Zugangsrestriktionen = 0 (=keine Einschränkungen)
   - Anzubietende QoS = "Best Effort"
   - Aktuelle Zellauslastung = 30%
WLAN-Zelle 22:
   - PLMN = 262002 (= Vodafone)
   - SSID = "WLAN-Zelle der Vodafone"
   - IP-Adresse = 235.255.201.101
   - WLAN-Technologie = IEEE 802.11b
   - Positionsdaten: (X22, Y22, 30m)
   - Typ = Öffentlich
   - Kategorie = Hotel
   - Zugangsrestriktionen = 7 (=mittlere Einschränkungen)
   - Anzubietende QoS = "Garantierte Bitrate von 0.064 Mbps"
   - Aktuelle Zellauslastung = 20%
WLAN-Zelle 23:
   - PLMN = 262015 (=Firma XYZ)
   - SSID = "WLAN-Zelle der Firma XYZ"
   - IP-Adresse = 211.157.155.98
   - WLAN-Technologie = Hiperlan/2
   - Positionsdaten: (X23, Y23, 100m)
   - Typ = Privat
   - Kategorie = Privatunternehmen
   - Zugangsrestriktionen = 12 (=hohe Einschränkungen)
   - Anzubietende QoS = "Übertragungsverzögerung von 50ms"
   - Aktuelle Zellauslastung = 80%

Anhand der empfangenen WLAN-Systeminformationen bestimmt der Mobilfunkteilnehmer die WLAN-Zelle 21 als die einzig geeignete in der derzeitigen UMTS-Zelle. Für WLAN-Zelle 21 bestehen keine Zugangsbeschränkungen aufgrund der Zugangsrestriktion = 0 und der aktuellen Zellauslastung von 30%. Mit Hilfe der Positionsdaten (X21, Y21, 50m) und der auf seinem UMTS-Terminal implementierten Methoden zur Positionsbestimmung kann der Mobilfunkteilnehmer die relative Entfernung zur WLAN-Zelle 21 ermitteln und sich dorthin begeben.

## Patentansprüche

1. Verfahren zur Übertragung von Daten in mindestens zwei Funkkommunikationssystemen (UMTS, WLAN) umfassend mindestens ein lokales Funkkommunikationssystem (WLAN) und mindestens ein zellulares, supralokales Funkkommunikationssystem (UMTS),
wobei eine Teilnehmerstation (MT) mit den mindestens zwei Funkkommunikationssystemen (UMTS, WLAN) über jeweils mindestens eine Funkzugangseinrichtung (NodeB, AP) kommunizieren kann,
**dadurch gekennzeichnet,**
**dass** die Funkzugangseinrichtung (NodeB) des mindestens einen zellularen, supralokalen Funkkommunikationssystems (UMTS) an die Teilnehmerstation (MT) Informationen bezüglich des mindestens einen lokalen Funkkommunikationssystem (WLAN) als Broadcast überträgt.

2. Verfahren nach Anspruch 1,
**dadurch gekennzeichnet,**
**dass** die Informationen bezüglich des mindestens einen lokalen Funkkommunikationssystem (WLAN) in Form von Systeminformationsblöcken übertragen werden.

3. Verfahren nach Anspruch 2,
**dadurch gekennzeichnet,**
**dass** die Informationen bezüglich des mindestens einen lokalen Funkkommunikationssystem (WLAN) in mindestens einem spezifischen Systeminformationsblock separat von anderen Systeminformationen übertragen werden.

4. Verfahren nach Anspruch 2 oder 3,
**dadurch gekennzeichnet,**
**dass** die Informationen bezüglich des mindestens einen lokalen Funkkommunikationssystems (WLAN) in Systeminformationsblöcken zusammen mit andersartigen Systeminformationen übertragen werden.

5. Verfahren nach einem der Ansprüche 1 bis 4,
**dadurch gekennzeichnet,**
**dass** die Informationen bezüglich des mindestens einen lokalen Funkkommunikationssystem (WLAN), vorzugsweise in Systeminformationsblöcken, als einzelne Informationselemente übertragen werden.

6. Verfahren nach Anspruch 5,
**dadurch gekennzeichnet,**
**dass** die Informationselemente Angaben zur Identität, zur Position des mindestens einen lokalen Funkkommunikationssystems (WLAN) und/oder zur Zugangsinformation zu dem mindestens einen lokalen Funkkommunikationssystem (WLAN) umfassen.

7. Verfahren nach einem der Ansprüche 1 bis 6,
**dadurch gekennzeichnet,**
**dass** die Informationen bezüglich des mindestens einen lokalen Funkkommunikationssystem (WLAN) zyklisch übertragen werden.

8. Netzwerk zur Übertragung von Daten mit mindestens zwei Funkkommunikationssystemen (UMTS, WLAN) umfassend mindestens ein lokales Funkkommunikationssystem (WLAN) und mindestens ein zellulares, supralokales Funkkommunikationssystem (UMTS),
wobei die mindestens zwei Funkkommunikationssysteme (UMTS, WLAN) mit einer Teilnehmerstation (MT) über jeweils mindestens eine Funkzugangseinrichtung (NodeB, AP) kommunizieren können,
**dadurch gekennzeichnet,**
**dass** die Funkzugangseinrichtung (NodeB) des mindestens einen zellularen, supralokalen Funkkommunikationssystems (UMTS) Mittel zum Übertragen von Informationen bezüglich des mindestens einen lokalen Funkkommunikationssystem (WLAN) an die Teilnehmerstation (MT) als Broadcast aufweist.

9. Netzwerk nach Anspruch 8,
**dadurch gekennzeichnet,**
**dass** die Mittel zum Übertragen von Informationen bezüglich des mindestens einen lokalen Funkkommunikationssystem (WLAN) zum Übertragen in Form von Systeminformationsblöcken ausgebildet sind.

10. Netzwerk nach Anspruch 8 oder 9,
**dadurch gekennzeichnet,**
**dass** die Mittel zum Übertragen von Informationen bezüglich des mindestens einen lokalen Funkkommunikationssystem (WLAN) so ausgebildet sind, dass die Informationen bezüglich des mindestens einen lokalen Funkkommunikationssystems (WLAN) in mindestens einem spezifischen Systeminformationsblock separat von anderen Systeminformationen und/oder in Systeminformationsblöcken zusammen mit andersartigen Systeminformationen übertragen werden.

11. Netzwerk nach einem der Ansprüche 8 bis 10,
**dadurch gekennzeichnet,**
**dass** das mindestens eine lokale Funkkommunikationssystem (WLAN) an das mindestens eine zellulare, supralokale Funkkommunikationssystem (UMTS) über eine Netzanbindungs-Einheit (IWU) angebunden ist.
